# DEMANDE DE BREVET EUROPEEN

(11) **EP 1 413 379 A1**
(43) Date de publication de la demande: **28.04.2004**
(21) Numéro de dépôt: 02079452.5
(22) Date de dépôt: 25.10.2002
(51) Int. Cl.: B23K 7/00, B23Q 7/00, B23Q 7/05

(54) **Procédé d'oxycoupage d'une brame et installation pour sa mise en oeuvre**

(71) Demandeur: European Steel Mill Services, 75008 Paris (FR)
(72) Inventeur: Wright, Ken, Dearborn, Michigan 48110 (US); Goffette, Julien, 8800 Deyvillers (FR)
(74) Mandataire: Waxweiler, Jean

(57) **Abrégé**

L'invention concerne un procédé d'oxycoupage d'une brame parallélipipède (18), placée sur chant dans un poste de coupage (10), à l'aide d'au moins un chalumeau d'oxycoupage (28) comprenant les étapes de manipuler la brame sa position de chargement horizontale dans une position verticale, stabiliser la brame dans le poste de coupage dans cette position en des points de stabilisation, couper la brame en déplaçant le chalumeau d'oxycoupage (28) d'un côté de la surface majeure de la brame (18) le long de son extension horizontale d'un bord vertical à l'autre bord vertical, libérer la brame lors du passage du chalumeau d'oxycoupage en un point de stabilisation pour laisser passer le chalumeau (28), restabiliser la brame (18) après le passage du chalumeau (28) et, après la terminaison dudit coupage de la brame (18), libérer celle-ci et l'amener hors du poste de coupage (10).

L'invention concerne également une installation pour la mise en oeuvre du procédé.

## Description

L'invention concerne un procédé d'oxycoupage d'une brame parallélipipède, placée sur chant dans un poste de coupage, à l'aide d'au moins un chalumeau d'oxycoupage et une installation pour la mise en oeuvre du procédé.

Divers procédés d'oxycoupage sont connus dans l'art, comme par exemple celui décrit dans la demande de brevet française numéro de publication 2 746 686. Dans ce procédé la brame est placée sur chant sur une série de rouleaux entraînés pour laisser défiler la brame devant un chalumeau d'oxycoupage entre des paires de rouleaux verticaux montés fous.

Dans la demande de brevet européen numéro de publication 1177850, un procédé d'oxycoupage de brames et un dispositif pour sa mise en oeuvre sont décrits. Les brames sont refendues ou débitées en position horizontale ou sur chant, suspendus par des électro-aimants au-dessous de rouleaux d'entraînement.

Ces procédés et systèmes connus présentent certains inconvénients.

Le but de l'invention est de fournir un procédé d'oxycoupage d'une brame et une installation pour sa mise en oeuvre qui ne possèdent pas les inconvénients et permettent un travail rapide, soigné et économique.

Selon l'invention ce but est réalisé par un procédé d'oxycoupage d'une brame parallélipipède, placée sur chant dans un poste de coupage, à l'aide d'au moins un chalumeau d'oxycoupage, comprenant les étapes suivantes:
a) manipuler la brame à couper de sorte à l'amener de sa position de chargement horizontale dans le poste de coupage dans une position verticale;
b) stabiliser la brame à couper dans le poste de coupage dans la position verticale en au moins deux endroits le long de son extension horizontale;
c) couper la brame en déplaçant un chalumeau d'oxycoupage d'un côté de la surface majeure de la brame le long de son extension horizontale d'un bord vertical à l'autre bord vertical;
d) libérer la brame à couper lors du passage du chalumeau d'oxycoupage à chaque endroit de stabilisation, afin de permettre le passage libre du chalumeau d'oxycoupage;
e) stabiliser à nouveau la brame à couper après le passage du chalumeau d'oxycoupage par chaque endroit de stabilisation; et
f) après la terminaison dudit coupage de la brame, libérer la brame et l'amener de sa position de coupe verticale dans une position de décharge hors du poste de coupage.

Pour le traitement continu selon l'invention, on peut amener pendant le transfert de la brame coupée vers sa position de déchargement horizontale une autre brame à couper de sa position de chargement horizontale dans le poste de coupage dans une position verticale pour la couper en répétant les étapes de a) à f), et qu'on répète les étapes décrites jusqu'à ce qu'on ait coupé la dernière brame à couper.

Aussi, peut-on ébavurer la brame coupée en faisant passer de l'autre côté de la surface majeure de la brame un système d'ébavurage en unisson avec le chalumeau d'oxycoupage. On peut également racler pendant le transfert de la brame coupée vers la position de son déchargement le sol du poste de coupage.

Selon l'invention son but est réalisé par une installation d'oxycoupage comprenant un poste de coupage d'une brame et au moins un chalumeau d'oxycoupage, un chariot mobile entre une position de chargement, le poste de coupage et une position de déchargement, ledit chariot comprend au moins deux moyens de levage tournant pour brames recevant la brame à couper en position horizontale pour l'amener en position de travail verticale du poste de coupage, au moins deux bras de maintien verticaux mobiles entre une position de retrait et une position de travail avancée par rapport à la position de retrait pour stabiliser la brame dans sa position de travail, au moins un rail de support et de guidage sur lequel ledit au moins un chalumeau d'oxycoupage se déplace le long de la brame pendant l'opération d'oxycoupage d'une brame, un moyen de commande des moyens de levage tournants pour brames sur le chariot et des bras de maintien verticaux pour rabattre chaque moyen de levage et ramener chaque bras de maintien dans sa position de retrait lors du passage du chalumeau d'oxycoupage dans la zone qu'il occupe et les ramener dans leur position de travail respective après le passage dudit chalumeau d'oxycoupage.

Pour le travail continu l'installation selon l'invention comprend en outre un second chariot attelé audit premier chariot et comportant aussi au moins deux moyens de levage tournants, et ledit moyen de commande commande également les moyens de levage tournant du second chariot, quand celui-ci se trouve dans le poste de coupage pour rabattre chacun de ses moyens de levage tournants, lors du passage dudit chalumeau d'oxycoupage dans la zone qu'il occupe et le ramener dans sa position de travail après le passage du chalumeau d'oxycoupage.

L'installation selon l'invention peut comprendre un second rail de support et de guidage parallèle à une certaine distance audit rail de support et de guidage dudit chalumeau d'oxycoupage pour un moyen d'ébavurage, ledit chalumeau et ledit moyen d'ébavurage se déplaçant en unisson de part et d'autre de la brame à couper dans le poste de coupe.

L'installation selon l'invention peut comprendre un racleur fixé à une extrémité d'un des chariots proche de l'autre extrémité de l'autre chariot pour toucher le sol.

Selon l'invention chaque moyen de levage tournant peut comprendre un bras coudé pouvant tourner à l'endroit du coude autour d'un axe et un vérin monté entre une extrémité du bras coudé et le chariot pour tourner ledit bras coudé autour de son axe de rotation, la partie dudit bras coudé entre ledit axe et l'autre extrémité dudit bras coudé étant aménagée pour recevoir la brame à couper.

Selon l'invention la partie du bras coudé destinée à recevoir la brame à couper peut avoir une surface plane pour recevoir la surface majeure de la brame et une deuxième surface perpendiculaire à la première surface destinée à recevoir un chant de la brame.

L'invention sera maintenant décrite à titre d'exemple non limitatif en se référant aux dessins annexés, dans lesquels:
Les figures 1A et 1B sont des projections horizontale et verticale, respectivement, de l'installation de coupe de brames selon l'invention; la brame à couper étant en position de coupe;

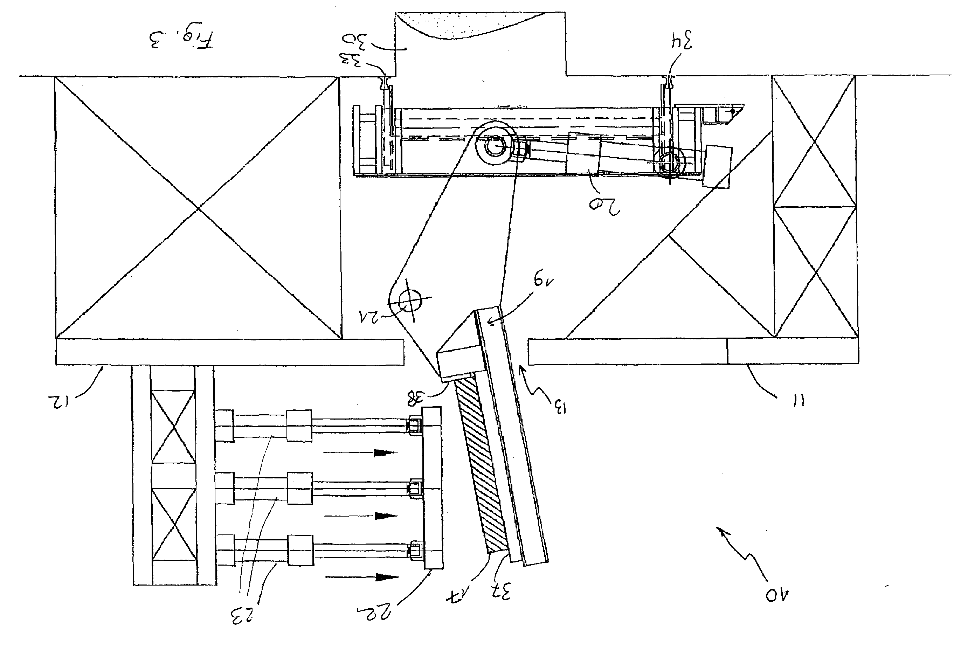

les figures 2, 3 et 4 sont respectivement des représentations en projection verticale d'un chariot porteur et élévateur de brame vu de front, en position de chargement/déchargement, en position intermédiaire et en position de travail, respectivement;

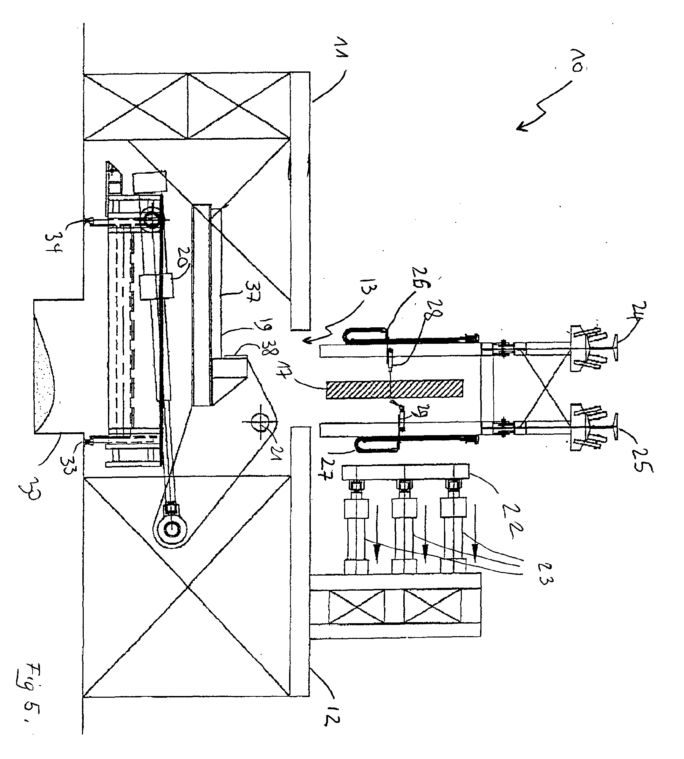

la figure 5 est une représentation de l'installation représentée aux figures 1A et 1B en coupe suivant la ligne V-V;
la figure 6 est une projection horizontale agrandie de l'installation de la figure 1A; et
la figure 7 est une représentation vue de face d'un chariot de l'installation couplé à un chariot identique (non représenté) servant à la mise en oeuvre de l'invention.

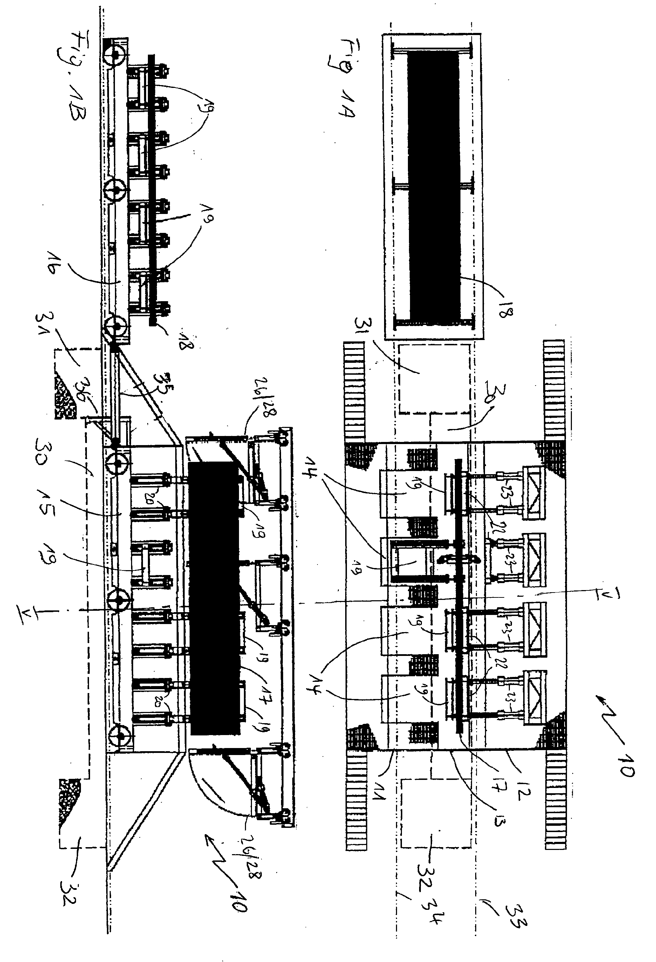

Un poste de coupage de brames 10 selon l'invention est représenté de façon schématique à la figure 1A en projection horizontale et à la figure 1B en projection verticale. Elle comprend une plate-forme antérieure 11 et une plate-forme postérieure 12 séparées par un espace libre 13. Cet espace libre 13 s'étend en plusieurs endroits 14 dans la plate-forme antérieure 11.

Dans le mode préféré de réalisation représenté on voit en outre aux figures 1A et 1B deux chariots 15 et 16 accouplés l'un à l'autre; le premier (15) des chariots 15 et 16 se trouve entre les plates-formes 11 et 12 et porte une brame 17 dans une position de coupe verticale, le second chariot 16 est chargé d'une brame à couper 18.

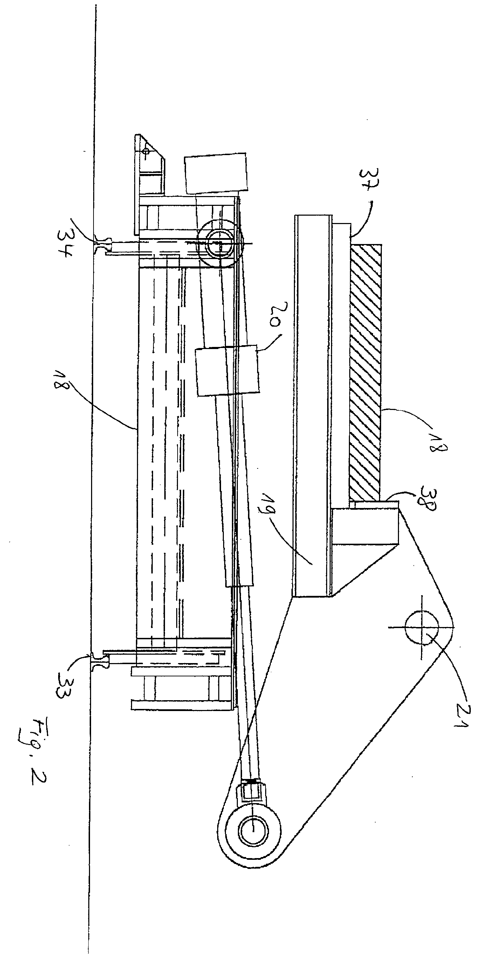

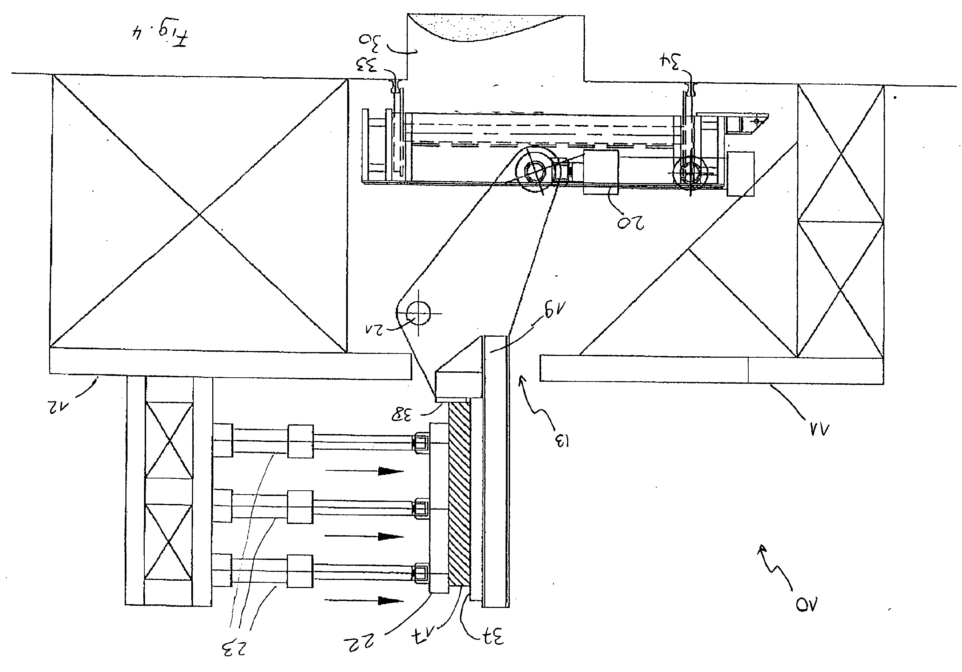

La brame à couper 18 repose horizontalement sur quatre bras 19 du chariot 16. Chaque bras 19 a une forme coudée. Des vérins hydrauliques 20 permettent la rotation de chacun des bras 19 autour d'un axe 21 à l'endroit du coude pour passer de la position de repos horizontale pour le chargement/déchargement de la brame (Fig. 2) dans la position de travail verticale (Fig. 4). Les vérins 20 sont implantés de chaque côté d'un bras 19 entre le chariot 15, 16 et une extrémité du bras. La partie du bras entre l'axe 21 et son autre extrémité est pourvue d'une surface plane 37 destinée à recevoir une surface majeure de la brame 18. Une deuxième surface 38 perpendiculaire à la surface plane 37 est aménagée pour recevoir un chant de la brame 18. Au total quatre bras 19 sont représentés par chariot 15, 16; suivant la longueur et le poids des brames 18 à couper tout autre nombre peut être choisi, mais il ne peut être inférieur à deux.

Sur la plate-forme postérieure 12 sont installés des bras 22 d'un nombre égal au nombre de bras 19 sur le chariot 15, 16. les bras 22 sont asservis pour permettre l'oxycoupage de brames 18 d'épaisseurs différentes. Cet asservissement est réalisé au moyen de vérins 23 hydrauliques ou autres. Dans le mode de réalisation préféré représenté les vérins 23 sont au nombre de six par bras 22; ils sont disposés en deux colonnes parallèles de trois vérins chacune et sont implantés de chaque côté du bras 22.

Deux rails 24 et 25 sont installés au dessus du poste de travail 10. Les rails 24, 25 sont destinés à supporter et guider l'un (24) des rails au moins un chariot de coupage 26 et l'autre 25 un chariot d'ébavurage 28. Le chariot de coupage 26 porte au moins un chalumeau d'oxycoupage 27. Le chariot d'ébavurage 28 porte un dispositif d'ébavurage 29. Les chariots 26, 28 sont représentés de façon schématique à la figure 1A, à gauche dans la position lors du chargement de la brame dans le poste, au milieu du poste lors de l'action d'oxycoupage et

à droite après la terminaison de l'oxycoupage. Dans les deux positions extrêmes, le chalumeau d'oxycoupage 22 et le dispositif d'ébavurage sont repliés sur leur chariot 26, 28 respectif pour permettre le chargement et le déchargement d'une brame 18. Le chalumeau d'oxycoupage 27 et le dispositif d'ébavurage 29 sont également mobiles en hauteur pour les ajuster par rapport à la brame 17 à la bonne hauteur de coupage pour obtenir des morceaux de brame de la largeur désirée.

Dans le sol du poste de travail 10 est prévu un canal longitudinal 30 de récupération de déchets de l'action d'oxycoupage, c'est-à-dire des granules produites pour le coupage et l'ébavurage. A chaque extrémité du canal 30 est prévu un bassin de réception 31, 32, respectif, pour recevoir les déchets récupérés par le canal 30 de récupération.

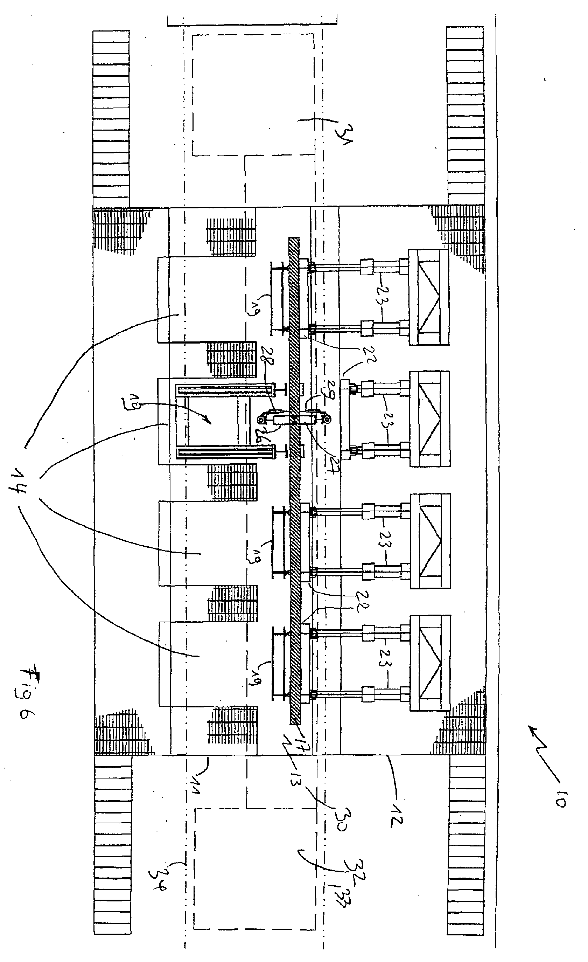

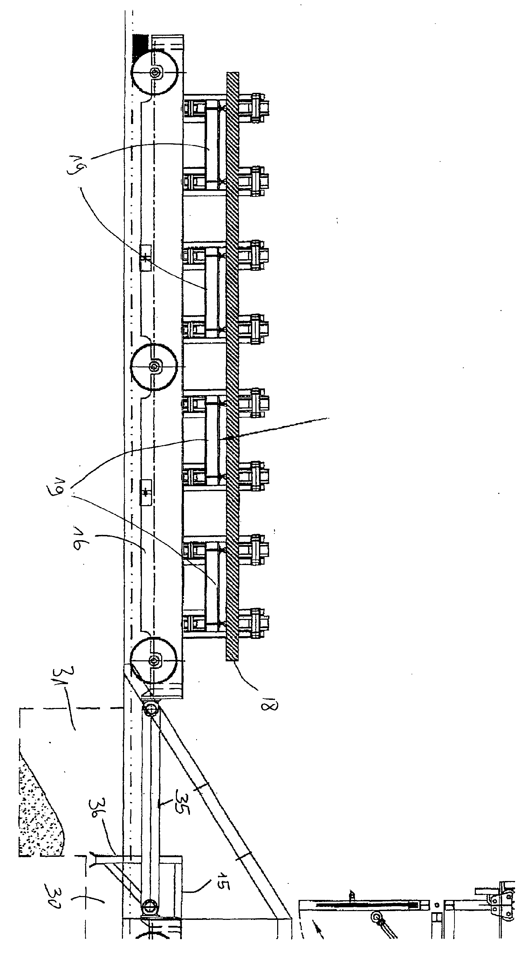

Des rails 33, 34 sont prévus dans ou sur le sol du poste de coupage 10 et de part et d'autre de celui-ci dans des zones dites de chargement/déchargement (non identifiées sur les figures 1A, 1B, 6 et 7). Les chariots 15, 16 se déplacent avec les brames 18, 17 sur ces rails 33, 34 lors du coupage des brames.

Les deux chariots 15, 16 sont accouplés l'un à l'autre au moyen d'un dispositif d'accouplement 35. Le chariot 15 est pourvu à son extrémité à laquelle il est accouplé au chariot 16 d'un racleur 36 plongeant dans le canal de récupération 30 pour nettoyer le canal 30 des déchets récupérés qui sont ainsi transférés dans un des bassins de réception 31, 32 suivant le sens de la marche du chariot 15. Le racleur 36 peut aussi être prévu à l'extrémité du chariot 16 opposant celle du chariot 15 où le racleur 36 est fixée dans le mode de réalisation représenté.

La marche de l'installation 10 à oxycouper des brames 18 est la suivante. Les chariots 15 et 16 se trouvant dans les positions montrées aux figures 1A et 1B. Une brame 18 est chargée à plat sur le chariot 15 se trouvant dans la zone de chargement/déchargement gauche de l'installation. Les deux chariots 15, 16 sont déplacés vers la droite; chariot 15 sort du poste 10 d'oxycoupage dans la zone de chargement/déchargement droite de l'installation et le chariot 16 entre dans le poste jusqu'à ce qu'il se trouve dans la position du chariot 15 aux figures 1A, 1B. Pendant ce temps le racleur 36 nettoie le fond du canal 30 de récupération et achemine les déchets éventuellement présent vers et finalement dans le bassin de réception 32 droite en fin de course.

La brame 18 à couper sur le chariot 16 est soulevée par les bras 19, basculée autour de l'axe 21 par des vérins 20 dans la position de coupage avant le départ des chariots 15, 16. Dépendant de la conception du poste de travail 10, en particulier de la plate-forme antérieure 11, le basculement de la brame 18 peut aussi se faire, quand le chariot 16 se trouve dans le poste de travail 10 ou sur son chemin de la zone de chargement dans le poste de travail 10. Toutefois, dans le mode de réalisation préféré de l'invention représenté dans les dessins, la plate-forme antérieure 11 ne permet pas le basculement dans le poste ou pendant l'acheminement de la brame 18 dans le poste, parce que l'espace libre 13 ne s'étend pas sur toute la longueur dans la plate-forme antérieure 11, mais seulement en quelques endroits 14 occupés chacun par un des bras 19, lorsqu'il est abaissé pour laisser le passage libre au chalumeau d'oxycoupage 28 lors du coupage de la brame. Ceci a l'avantage que l'opérateur du poste peut s'approcher de la brame et vérifier son ajustage, ainsi que celui du chalumeau d'oxycoupage 26, sur les parties de la plate-forme antérieure 11 situées entre les endroits 14, respectivement. Lorsque la brame 18 est soulevée vers la position verticale, ce mouvement de levage n'est exécuté que jusque dans une position différant légèrement de la verticale pour que la brame 18 à couper se tienne sur les bras 19 par son propre poids pendant l'acheminement dans le poste 10.

Quand le chariot 16 est en place dans le poste 10, ses bras 19 basculent la brame 18 à couper complètement dans la verticale. En même temps les vérins 23 font avancer vers la brame les bras 22 et en fin de course la brame est pincée ou stabilisée sur chant entre les bras 19 et 22.

Le chalumeau d'oxycoupage 26 et le dispositif d'ébavurage 20 sont basculés vers la brame 18, mis à la bonne hauteur de coupe et puis ils sont mis en service pour couper la brame 18. Le chalumeau 28 et le dispositif d'ébavurage 29 sont déplacés sur les rails 24 et 25 jusqu'au et au-delà du bord droit de la brame 18. Lorsque le chalumeau 28 et le dispositif 29 arrivent à la hauteur d'une paire de bras 19 et 22, le bras 19 est rabattu autour de son axe 21 par les vérins associés 20 et le bras 22 est rétracté par ses vérins associés 23. Après le passage du chalumeau 28 et du dispositif 29, les bras 19 et 22 sont ramenés en contact avec la brame à couper et la coupe continue pour répéter le fonctionnement décrit à chaque paire de bras 19 et 22. L'opération de coupage terminée, le chalumeau 28 et le dispositif 29 sont écartés et repliés sur le chariot respectif 26, 28 pour laisser le passage à la brame 18 coupée sur le chariot 16.

Entretemps une brame 18 a été chargée dans l'espace de chargement/déchargement droite sur le chariot 15.

Les bras 22 sont rétractés par les vérins 23. En même temps les bras 19 sur le chariot 16 sont légèrement basculés vers la gauche pour les incliner avec la brame 18 coupée, qui reste alors mieux en place sur les bras 19 sous son propre poids.

Les chariots 15 et 16 sont ensuite déplacés ensembles vers la gauche. Le chariot 16 avec la brame 18 coupée sort du poste dans la zone de chargement/déchargement gauche où la brame coupée 18 est déchargée du chariot 16 et une nouvelle brame 18 à couper est chargée sur le chariot 16.

Lors du déplacement des chariots 15, 16 vers la gauche, le racleur 36 racle le fond du canal de récupération 30 et emporte les déchets résultant de l'oxycoupage et de l'ébavurage vers et les dépose dans le bassin de réception 31 gauche. Le chariot 15 rentre la brame 18 dans le poste pour la couper. Les mêmes opérations qui viennent d'être décrites en rapport avec le chariot 16, sont répétées, et ainsi de suite jusqu'à ce que le nombre désiré de brame ait été coupé.

On peut aussi ne prévoir qu'un chariot, p.ex. le chariot 15. Le fonctionnement de l'installation sera la même, mais moins vite, parce qu'il n'y a qu'un chariot et le chargement et le déchargement des brames ne se fait pas par temps caché, c-à-d pendant qu'on coupe une brame 18 sur un chariot 16 on décharge la brame 18 coupée du chariot 15 pour ensuite charger de nouveau une brame 18 à couper.

## Revendications

1. Procédé d'oxycoupage d'une brame parallélipipède, placée sur chant dans un poste de coupage, à l'aide d'au moins un chalumeau d'oxycoupage (27), **caractérisé par** les étapes suivantes.
a) manipuler la brame (18) à couper de sorte à l'amener de sa position de chargement horizontale dans le poste de coupage (10) dans une position verticale;
b) stabiliser la brame (18) à couper dans le poste de coupage (10) dans la position verticale en au moins deux endroits le long de son extension horizontale;
c) couper la brame (18) en déplaçant un chalumeau d'oxycoupage (27) d'un côté de la surface majeure de la brame (18) le long de son extension horizontale d'un bord vertical à l'autre bord vertical;
d) libérer la brame (18) à couper lors du passage du chalumeau d'oxycoupage (27) à chaque endroit de stabilisation, afin de permettre le passage libre du chalumeau d'oxycoupage (27);
e) stabiliser à nouveau la brame (18) à couper après le passage du chalumeau d'oxycoupage (27) par chaque endroit de stabilisation; et
f) après la terminaison dudit coupage de la brame(18), libérer la brame (18) et l'amener de sa position de coupe verticale dans une position de décharge hors de le poste de coupage (10).

2. Procédé selon la revendication 1, **caractérisé en ce que** pendant le transfert de la brame (18) coupée vers sa position de déchargement horizontale on amène une autre brame (18) à couper de sa position de chargement horizontale dans la station de coupage (10) dans une position verticale pour la couper en répétant les étapes de a) à f), et qu'on répète les étapes de la revendication 1 jusqu'à ce qu'on ait coupé la dernière brame à couper.

3. Procédé selon la revendication 1 ou 2, **caractérisé en ce qu'**on ébavure la brame (18) coupée en faisant passer de l'autre côté de la surface majeure de la brame (18) un système d'ébavurage (29) en unisson avec le chalumeau d'oxycoupage (27).

4. Procédé selon la revendication 1 ou 2, caractérise l'étape de racler pendant le transfert de la brame (18) vers la position de son déchargement le sol du poste de coupage.

5. Installation pour la mise en oeuvre du procédé de coupage de brames (18) à l'aide d'au moins un chalumeau d'oxycoupage (27) selon la revendication 1, comprenant un poste de coupage (10) d'une brame (18) et au moins un chalumeau d'oxycoupage (27), **caractérisée par** un chariot mobile (15) entre une position de chargement, le poste de coupage (10) et une position de déchargement, **caractérisé en ce que** ledit chariot (15) comprend au moins deux moyens de levage tournant (19) pour brames recevant la brame (18) à couper en position horizontale pour l'amener en position de travail verticale du poste de coupage (10), au moins deux bras de maintien (22) verticaux mobiles entre une position de retrait et une position de travail avancée par rapport à la position de retrait pour stabiliser la brame (18) dans sa position de travail, au moins un rail (24) de support et de guidage sur lequel ledit au moins un chalumeau d'oxycoupage (27) se déplace le long de la brame (18) pendant l'opération d'oxycoupage d'une brame, un moyen de commande des moyens de levage (19) tournant pour brames sur le chariot et des bras (22) de maintien verticaux pour rabattre chaque moyen de levage (19) et ramener chaque bras (22) de maintien dans sa position de retrait lors du passage du chalumeau d'oxycoupage (27) dans la zone qu'il occupe et les ramener dans leur position de travail respective après le passage dudit chalumeau d'oxycoupage (27) .

6. Installation selon la revendication 5, **caractérisée en ce que** pour le fonctionnement en continu, un second chariot (16) attelé audit premier chariot (15) et comportant aussi au moins deux moyens de levage (19) tournant, et que ledit moyen de commande commande également les moyens de levage (19) tournant du second chariot (16), quand celui-ci se trouve dans le poste de coupage (10) pour rabattre chacun de ses moyens de levage (19) tournant lors du passage dudit chalumeau d'oxycoupage (27) dans la zone qu'il occupe et le ramener dans sa position de travail après le passage du chalumeau d'oxycoupage (27).

7. Installation selon la revendication 5 ou 6, **caractérisée par** un second rail (25) de support et de guidage parallèle à une certain distance au rail (24) de support et de guidage dudit chalumeau d'oxycoupage (27) pour un moyen d'ébavurage (29) se déplaçant en unisson avec ledit chalumeau d'oxycoupage (27) de part et d'autre de la brame à couper dans le poste de coupe (10).

8. Installation selon la revendication 6, **caractérisée par** un racleur (36) fixé à une extrémité d'un (15) des chariots (15,16) à l'extrémité proche de l'autre extrémité de l'autre chariot (16) pour toucher le sol.

9. Installation selon une des revendications 5 à 8, **caractérisée en ce que** chaque moyen de levage (19) tournant comprend un bras coudé (19) pouvant tourner à l'endroit du coude autour d'un axe (21) et un vérin (20) monté entre une extrémité du bras coudé (19) et le chariot (15 ou 16) pour tourner ledit bras coudé (19) autour de son axe de rotation (21), la partie dudit bras coudé entre ledit axe (21) et l'autre extrémité dudit bras coudé étant aménagée pour recevoir la brame (18) à couper.

10. Installation selon la revendication 9, **caractérisée en ce que** la partie du bras coudé (19) destinée à recevoir la brame (18) à couper comprend une surface plane (37) pour recevoir la surface majeure de la brame (18) et une deuxième surface perpendiculaire à la première surface destinée à recevoir un chant de la brame (18).
